# EUROPEAN PATENT APPLICATION

(11) **EP 1 519 084 A2**
(43) Date of publication of application: **30.03.2005**
(21) Application number: 04022811.6
(22) Date of filing: 24.09.2004
(51) Int. Cl.: F16H 63/30, F16H 61/04

(54) **Vehicle transmission**

(30) Priority: 26.09.2003 JP 2003336099; 10.11.2003 JP 2003379567
(71) Applicant: NTN CORPORATION, Osaka (JP)
(72) Inventor: Sahashi, Koji, Iwata-shi Shizuoka (JP); Makino, Tomoaki, Iwata-shi Shizuoka (JP); Makino, Yusuke, Iwata-shi Shizuoka (JP)
(74) Representative: Grünecker, Kinkeldey, Stockmair & Schwanhäusser Anwaltssozietät

(57) **Abstract**

A transmission for use in a vehicle includes a main shaft connected to an engine and carrying a plurality of first gears fuxed thereto, and a countershaft connected to drive wheels and carrying as many second gears as the first gears, each through a roller clutch which is selectively engaged and disengaged by energizing and deenergizing an electromagnetic clutch. Each of the first gears meshes with one of the second gears to provide a predetermined gear ratio that is different from the gear ratios provided by the other pairs. When a shift lever is moved from first to second position, an electronic control unit disengages the roller clutch corresponding to the second gear corresponding to the first position, adjusts the engine speed to synchronize the pair of gears corresponding to the second position with the countershaft, and engages the roller clutch corresponding to the second gear corresponding to the second position. Gear change can thus be made without depressing the clutch pedal to disengage the torque transmission clutch connected to the clutch pedal.

## Description

### BACKGROUND OF THE INVENTION

This invention relates to a transmission for a vehicle which is simple in structure and can be changed over from one gear position to another in a quick, reliable and smooth manner, and a control system for controlling the same.

Most of the recent manual transmissions for vehicles are of the synchromesh type. A typical synchromesh transmission comprises a main shaft connected to the engine of the vehicle, an output shaft coaxial with the main shaft and connected to the drive wheels, and a countershaft extending parallel to the main shaft and the output shaft. The countershaft carries a plurality of first gears fixed thereto. The output shaft rotatably carries as many second gears as the first gears, each meshing with one of the first gears. The output shaft further carries conventional synchromesh devices which are nonrotatably but axially movably mounted on the output shaft so as to be brought into meshing engagement with the respective second gears by axially moving toward the respective second gears. When one of the synchromesh devices is axially moved toward the corresponding second gear, the inner conical surface of its synchronizer ring is brought into frictional contact with the complementary conical surface of the second gear before the gear of the synchronizer ring completely meshes with the second gear to synchronize the countershaft with the second gear. Thus, relatively large force is needed to move the synchromesh device into meshing engagement with the second gear.

JP (examined) patent publication 54-28894 proposes to increase or reduce the rotational speed of the countershaft before coupling the countershaft with the output shaft through selected first and second gears until the selected second gear is substantially synchronized with the output shaft. Since the second gear is nonrotatably coupled to the output shaft by axially moving the corresponding synchromesh device after the selected second gear has been substantially synchronized with the output shaft, the synchromesh device can be moved with a relatively light force.

But in order to operate this manual transmission as well as any other conventional manual transmissions, the driver initially has to depress the clutch pedal to disengage the torque transmission clutch coupled to the clutch pedal. This is troublesome to a driver in general, and will be a big burden for a less powerful driver. Moreover, while the torque transmission clutch is being disengaged, no torque is transmitted from the engine to the drive wheels. This means that the vehicle cannot be controlled by adjusting the engine speed all this while. This gives uncomfortableness to a driver, especially to a novice driver.

The torque transmission clutch, which is disengaged both when starting the vehicle and when changing gears, is typically a dry clutch. Hydraulic power is typically used to keep the clutch engaged and is also to assist in the force applied to the clutch pedal to disengage the clutch. Its friction disks get worn most remarkably when the clutch is engaged and disengaged. In order to prevent slippage of the friction disks even after the friction disks have get worn to a certain extent, it is necessary to press them against each other with a large hydraulic force. For this purpose, a large, heavy and expensive hydraulic pump is needed. Synchromesh devices also add to the size, weight and cost of the transmission.

An object of the invention is to provide a transmission which is basically a manual transmission but which can be changed over without the need to depress the clutch pedal to disengage the torque transmission clutch coupled to the clutch pedal.

### SUMMARY OF THE INVENTION

According to this invention, there is provided a transmission for use in a vehicle comprising a main shaft, a countershaft, and a plurality of pairs of gears, each pair comprising a first gear fixedly mounted on one of the main shaft and the counter shaft, and a second gear mounted on the other of the main shaft and the countershaft through a clutch unit comprising a roller clutch which can be selectively engaged and disengaged so as to selectively couple and uncouple the second gear to and from the other of the main shaft and the countershaft, and an electromagnetic clutch that is selectively energized and deenergized to engage and disengage the roller clutch, each of the plurality of pairs of gears meshing with each other and providing a different gear ratio from the other pairs of gears.

This transmission has the main shaft thereof connected to an engine of the vehicle and the countershaft thereof connected to wheels of the vehicle and is controlled by a control system comprising a shift lever shiftable between any two of a plurality of positions each corresponding to one of the plurality of pairs of gears, and a control unit for detecting the position of the shift lever, disengaging one of the clutch units corresponding to the position from which the shift lever has shifted, controlling the engine revolution such that the main shaft rotates in synchronization with the countershaft and the pair of gears corresponding to the position to which the shift lever has shifted, and engaging the clutch unit corresponding to the position to which the shift lever has shifted. Gear change can thus be made without the need to depress the clutch pedal.

From another aspect of the invention, there is provided a transmission for use in a vehicle comprising a main shaft, a countershaft, a plurality of pairs of gears, each pair comprising a first gear fixedly mounted on one of the main shaft and the counter shaft, and a second gear rotatably mounted on the other of the main shaft and the countershaft, dog clutches each for engaging at least one of the second gears and nonrotatably mounted on one of the main shaft and the countershaft on which the at least one of the second gears is mounted, an drive shaft through which torque can be transferred between the countershaft and the wheels of the vehicle, and a torque transmission clutch provided between the countershaft and the drive shaft for selectively coupling and uncoupling the countershaft to and from the drive shaft.

The torque transmission clutch may be a wet type multiple disk clutch or a dry type single disk clutch, but is preferably a roller clutch. A roller clutch can be instantly moved between the engaged and disengaged positions by energizing and deenergizing an electromagnetic clutch. The roller clutch is larger in torque capacity than wet multiple disk clutches and dry single disk clutches, too. Since the roller clutch can be instantly engaged and disengaged, it is possible to minimize the period of time during which the engine is disconnected from drive wheels for gear change.

This transmission has its main shaft connected to an engine of the vehicle and its countershaft connected to the wheels of the vehicle, and is controlled by a control system comprising a shift lever shiftable between any two of a plurality of positions each corresponding to one of the plurality of pairs of gears, and a control unit for detecting the position of the shift lever, disengaging the torque transmission clutch, disengaging one of the dog clutches from one of the second gears corresponding to the position from which the shift lever has shifted, controlling the engine revolution such that the main shaft rotates in synchronization with the countershaft and the pair of gears corresponding to the position to which the shift lever has shifted, and bringing one of the dog clutches into engagement with one of the second gears to which the shift lever has shifted, and engaging the torque transmission clutch.

### BRIEF DESCRIPTION OF THE DRAWINGS

Other features and objects of the present invention will become apparent from the following description made with reference to the accompanying drawings, in which:
Fig. 1 is a schematic view of a power train of a vehicle including a transmission of a first embodiment according to the present invention;
Fig. 2 is a schematic view of a control system for controlling the transmission of Fig. 1;
Fig. 3 is a sectional view of one of a plurality of clutch units used in the transmission of Fig. 1;
Fig. 4A is a sectional view taken along line A-A of Fig. 3;
Fig. 4B is a sectional view taken along line B-B of Fig. 3;
Figs. 5A and 5B are partial sectional views of the roller clutch of the clutch unit of Fig. 3, showing their different operational states;
Fig. 6 is a schematic view of a power train of a vehicle including a transmission of a second embodiment according to the present invention;
Fig. 7 is a schematic view of a control system for controlling the transmission of Fig. 6;
Fig. 8 is a sectional view of one of a plurality of dog clutches used in the transmission of Fig. 6;
Fig. 9 is a sectional view of a clutch unit through which the countershaft is selectively coupled to the drive shaft; and
Fig. 10 is a schematic view of a different control system for controlling the transmission of Fig. 6.

### DETAILED DESCRIPTION OF THE PREFERRED EMBODIMENTS

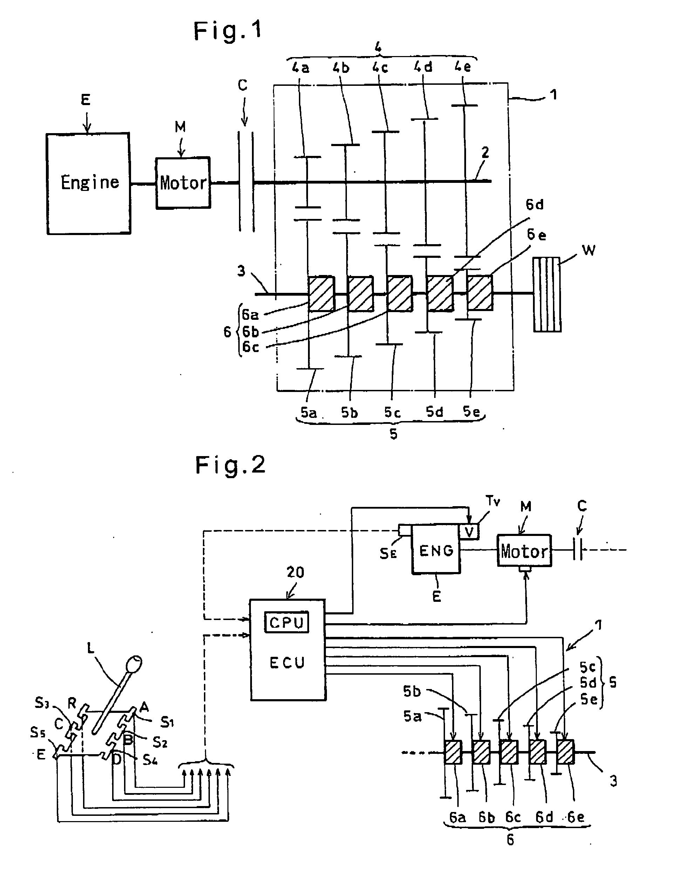

Now referring to the drawings, Fig. 1 shows a power train of a vehicle for delivering the driving force produced by an engine E to wheels W (only one is shown). It includes a transmission 1 of the first embodiment of the present invention. The transmission 1 includes a main shaft 2 carrying a plurality of (five in this embodiment) gears 4 (4a-4e), and a countershaft 3 extending parallel to the main shaft 2 and carrying as many gears 5 (5a-5e) as the gears 4, with each of the gears 4 meshing with one of the gears 5.

In this embodiment, the gears 4 (4a-4e) are fixedly mounted on the main shaft 2, while the gears 5 (5a-5e) are mounted on the countershaft 3, each through one of a plurality of clutch units 6 (6a-6e). But the gears 5 may be fixedly mounted on the countershaft 3 with the gears 4 mounted on the main shaft 2 through the clutch units 6. Detailed structure of the clutch units 6 will be described later.

Each gear 4 meshes with the corresponding gear 5 to provide a predetermined speed reduction ratio. Specifically, the pair of gears 4a and 5a provides a first speed (low speed), the pair of gears 4b and 5b provides a second speed (lower middle speed), the pair of gears 4c and 5c provides a third speed (middle speed), the pair of gears 4d and 5d provides a fourth speed (higher middle speed), and the pair of gears 4e and 5e provides a fifth speed (high speed), While not shown, another pair of gears are also mounted each on one of the shafts 2 and 3 and mesh with each other through a pinion gear to provide reverse rotation of the wheels. The engine E is connected to the transmission 1 through a torque transmission clutch C. Between the clutch C and the engine E, an electric motor M is provided to control the rpm of the engine.

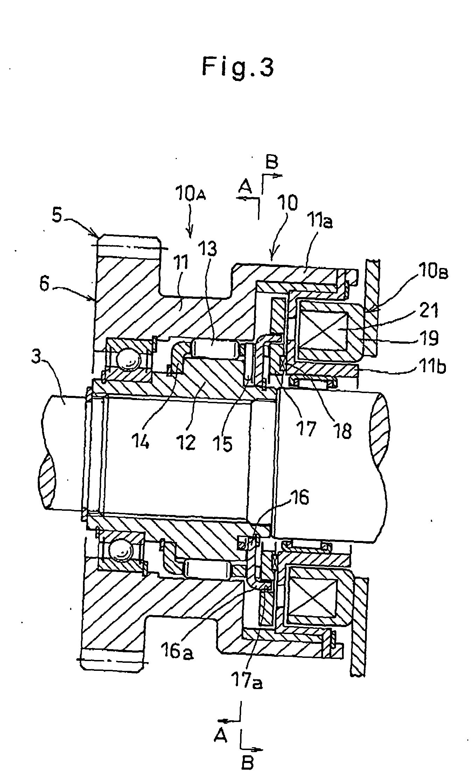

The clutch units 6 are all of the same structure. Fig. 3 shows one of the clutch units 6. It comprises a roller clutch 10A and an electromagnetic clutch 10B. The roller clutch 10A comprises an outer member 11 which is integrally formed on the radially inner periphery of the corresponding gear 5, an inner member 12 fixed to the countershaft 3, and a plurality of (twelve in this embodiment) rollers 13 disposed between the outer member 11 and the inner member 12 so that torque is selectively transmitted between the inner and outer members 12 and 11 through the rollers 13. The electromagnetic clutch 10B includes an electromagnetic coil 21, a rotor 11b fixed to an extension 11a of the outer member 11, and an armature 17 facing the electromagnetic coil 21 with the rotor 11b disposed therebetween.

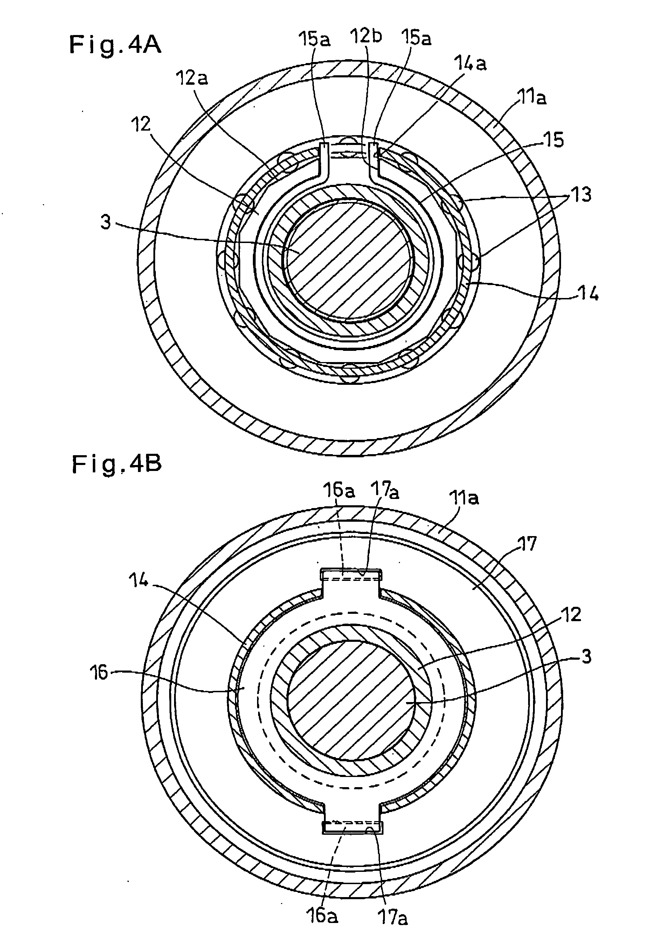

The roller clutch 10A further includes a retainer 14 rotatably mounted around the inner member 12 and formed with pockets each for receiving and retaining one of the twelve rollers 13. As shown in Fig. 4A, the inner member 12 is formed with circumferentially arranged, flat cam surfaces each extending tangent to the circumference of the countershaft 3. Each roller 13 is received in a wedge-shaped space defined between one of the cam surfaces and a cylindrical inner surface formed on the inner periphery of the outer member 11. The rollers 13 and the wedge-shaped spaces are dimensioned such that the rollers 13 are not in engagement with at least one of the inner member 12 and the outer member 11 when they are each in the center of the cam surface, and engage both members when they move toward one side of the respective wedge-shaped spaces.

A substantially C-shaped switch spring 15 is disposed between one side of the retainer 14 facing the electromagnetic clutch 10B and a spring presser 16 (see Fig. 3 and 4B) rotatably supported on the inner member 12 and axially facing the armature 17.

The spring presser 16 has two diametrically opposed axial protrusions 16a inserted in cutouts 14a formed in the end face of the retainer 14 and holes 17a formed in the armature 17, thereby supporting the armature 17 so as to be axially movable but non-rotatable relative to the retainer 14.

At both ends, the C-shaped switch spring 15 has radially outwardly extending protrusions 15a (Fig. 4A) received in a cutout 12b formed in a cylindrical portion of the retainer 14 and one of the cutouts 14a formed in the retainer 14 to bias the end walls of the respective cutouts in the opposite rotational directions. Thus, in a normal state, the cutouts are kept radially aligned with each other with the rollers 13 kept at central portions of the respective cam surfaces by the biasing force of the switch spring 15.

An elastic member 18 such as a disk spring is disposed between the rotor 11b and the armature 17 to bias the armature axially away from the rotor 11b. Thus, while the electromagnetic coil 21 is not energized, the armature 17 is kept apart from the rotor 11b. As shown in Fig. 3, the rotor 11b has a substantially U-shaped axial section and has its radially outer portion fixed to the extension 11a of the outer member 11 and its radially inner portion rotatably supported on the countershaft 3 through a bearing. The electromagnetic coil 21 is supported in a bobbin 19 received in the rotor 11b.

The transmission 1 (particularly its clutch units 6 (6a-6e)) is controlled by a control system shown in Fig. 2. The control system includes an electronic control unit (ECU) 20 which receives signals that indicate the respective gear speeds from switches S1-S5 which are changed over by operating a shift lever L, and signals indicative of the rpm of the engine E from an engine revolution sensor SE. Based on these signals, the ECU 20 controls the rpm of the engine by adjusting the degree of opening of a throttle valve Tv or the firing timing of the spark plugs, and selectively engages and disengages the respective clutch units 6 of the transmission 1.

The ECU 20 is typically a microcomputer having a fixed memory in which are stored a program for controlling the rpm of the engine and a program for controlling the clutch units of the transmission 1. Switch signals from the switches S1-S5 and signals from the engine revolution sensor SE are stored in a temporary memory. Based on these signals and signals from an accelerator pedal stroke sensor (not shown), the ECU 20 controls the degree of opening of the throttle valve or the firing timing to adjust the engine revolution to an optimum level while the shift lever is being changed over.

With the arrangement of the present invention, the driver does not have to push in the clutch pedal to disengage the clutch C every time he or she shifts gears. To change gears, the driver merely moves the shift lever from one position to another with the accelerator pedal either kept pushed in or released and without depressing the clutch pedal. For example, in order to upshift from second to third gear speed, the shift lever L is moved from position B to position C (thereby turning off the switch S2 and turning on the switch S3). The moment the switch S2 is turned off, the ECU 20 deenergizes the electromagnetic clutch of the clutch unit 6b, which corresponds to the switch S2, to disengage its roller clutch. Simultaneously, the ECU 20 adjusts the degree of opening of the throttle valve Tv, overriding the input from the accelerator pedal, to control the engine rpm to an optimum level.

When the shift lever L is subsequently put into position C and the switch S3 is turned on, the ECU 20 now calculates the rotational speed NREF of the main shaft 2 necessary to synchronize the rotational speeds of the pair of gears 4c and 5c, which correspond to the third gear speed, compares this value NREF with the current rotational speed NE of the main shaft 2, and adjusts the degree of opening of the throttle valve to increase or decrease the engine rpm until the value NE is substantially equal to the value NREF. Then, the ECU 20 energizes the electromagnetic clutch of the clutch unit 6c to engage its roller clutch. The engine torque is thus transmitted from the main shaft 2 to the countershaft 3 through the gear pair corresponding to the third gear speed. In this manner, upshift and downshift between the first and second speeds, between the third and fourth speeds or between the fourth and fifth speeds can be easily carried out simply by moving the shift lever L without depressing the clutch pedal.

During upshifting, it is usually necessary to reduce the rotational speed of the main shaft 2 for synchronization. During downshifting, it is usually necessary to increase the rotational speed of the main shaft 2 for synchronization. However, if the value NE is significantly lower or significantly higher than the value NREF, it may be difficult to quickly increase or reduce the rotational speed of the main shaft 2 to the target value NREF simply by adjusting the degree of opening of the throttle valve. In such a case, the ECU 20 controls the motor M to assist in quickly increasing or reducing (especially increasing) the rotational speed of the main shaft 2.

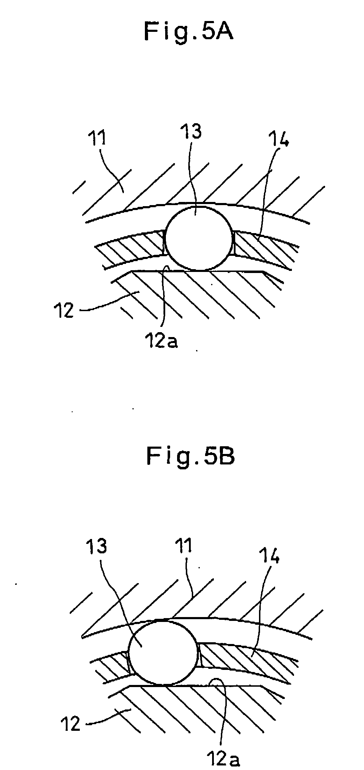

In order to engage one of the clutch units 6, the ECU 20 simply energizes its electromagnetic coil 21. As described above, while the coil 21 is not being energized, the armature 17 is axially separated from the rotor 11b by the elastic member 18, and the rollers 13 are kept at the centers of the respective cam surfaces by the switch spring 15 as shown in Fig. 5A. Thus, the outer member 11 and the countershaft 3 are freely rotatable relative to each other and no torque is transmitted therebetween.

When the electromagnetic coil 21 is energized, the armature 17 is magnetically attracted toward the coil against the force of the elastic member 18 until it is pressed against the rotor 11b. Due to the frictional force between the armature 17 and the rotor 11b, the retainer 14 and the outer member 11 are now coupled together so as not to be rotatable relative to each other through the rotor 11b, the armature 17 and the spring presser 16. In this state, when the outer member 11 and thus the retainer 14 rotate even slightly in either rotational direction relative to the inner member 12, the rollers 13 will wedge into one of the narrow portions of the respective wedge-shaped spaces, thereby locking the inner member 12 and the outer member 11 together. The rotation of the outer member 11 is now transmitted to the inner member 12, or vice versa.

When the retainer 14 rotates relative to the inner member 12, one of the protrusions 15a of the switch spring 15 is pushed by one of the end walls defining the cutout 14a of the retainer 14 toward the other protrusion 15a, causing the switch spring 15 to be elastically deformed. Thus, when the electromagnetic coil 21 is deenergized, under the elastic restoring force of the switch spring 15, the retainer 14 will instantly rotate relative to the inner member 12 back to its original position where the rollers 13 are at the centers of the respective cam surfaces.

In each clutch unit 6, an actuator other than the electromagnetic clutch 10B may be used to selectively engage and disengage the roller clutch A. The roller clutch can be engaged by turning the retainer and thus the outer member relative to the inner member by a short distance necessary to wedge the rollers into one of the narrow ends of the respective wedge-shaped spaces. Also, unlike dog clutches, even if the inner member and the outer member are rotating at different speeds, the roller clutch can be engaged. Thus, the roller clutch can be engaged more quickly, reliably and smoothly than dog clutches.

Because gear change can be made without the need to depress the clutch pedal to disengage the clutch connected to the clutch pedal, the duration of the clutch improves. One of the pair of gears that is about to be meshed with one of the main shaft and the countershaft is synchronized with the one shaft by adjusting the engine rpm. Thus, no separate synchronizers are necessary, so that the transmission can be made compact.

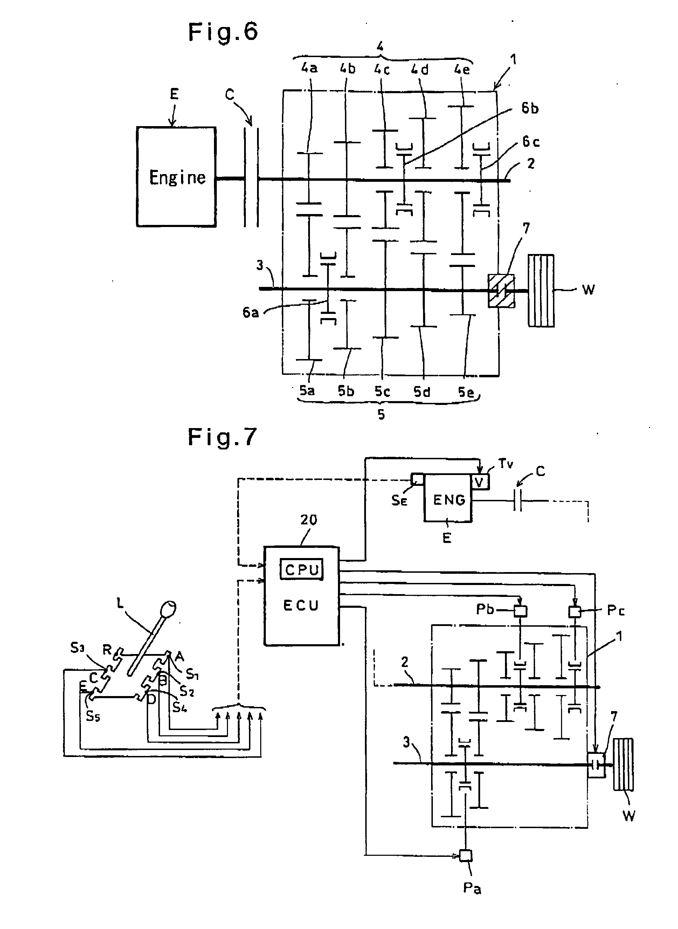

The second embodiment is now described with reference to Figs. 6-10. In this embodiment, elements identical or similar to the elements of the first embodiment are denoted by identical numerals. As shown in Fig. 6, the transmission 1 of this embodiment is mounted in a power train of a vehicle through which the torque of the engine E is delivered to wheels W (only one is shown). The transmission 1 includes a main shaft 2 carrying gears 4a-4e, and a countershaft 3 extending parallel to the main shaft 2 and carrying gears 5a-5e each meshing with the corresponding one of the gears 4a-4a.

Of the gears 4a-4e, the two gears 4a and 4b are nonrotatably (fixedly) mounted on the main shaft 2, while the other three gears 4c, 4d and 4e are rotatably mounted on the main shaft 2. Of the gears 5a-5e, the two gears 5a and 5b, which mesh with the gears 4a and 4b, respectively, are rotatably mounted on the countershaft 3, while the other three gears 5c, 5d and 5e, which mesh with the gears 4c-4e, respectively, are nonrotatably (fixedly) mounted on the countershaft 3. The countershaft 3 further carries a dog clutch 6a. The main shaft 2 further carries dog clutches 6b and 6c.

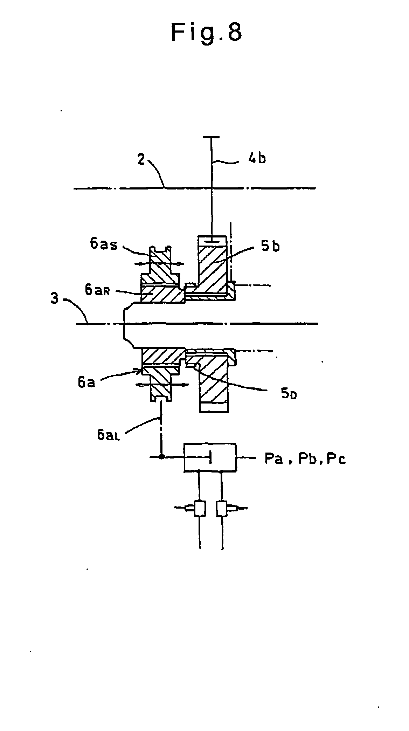

Fig. 8 shows the dog clutch 6a, which is disposed between the rotatable gears 5a and 5c, and comprises a ring member 6aR fixed to the countershaft 3, and a sleeve member 6aS mounted on the ring member 6aR so as to be nonrotatable but axially movable relative to the ring member 6aR. The sleeve member 6aS has splines on its radially inner periphery which are adapted to mesh with dog teeth 5D formed on a boss portion of the gear 5b or similar dog teeth 5D formed on the gear 5a, thereby nonrotatably coupling the gear 5a or 5b to the countershaft 8, when the sleeve member 6aS is axially moved in one direction. The dog clutches 6b and 6c, which are of the same structure as the dog clutch 6a, are disposed between the rotatable gears 4c and 4d and on one side of the rotatable gear 4e, respectively. Thus, any of the rotatable gears 4c, 4d and 4e can be nonrotatably coupled to the main shaft 2 through the dog clutch 6b or 6c by engaging the clutch 6b or 6c to the selected one of the gears 4c-4e in the same manner as the dog clutch 6a is brought into engagement with the gear 5a or 5b.

As shown in Figs. 7 and 8, the sleeve members 6aS, 6bS and 6cS of the dog clutches 6a-6c are coupled to piston rods of cylinders Pa-Pc through forks 6aL, 6bL and 6cL, respectively, so as to be moved into engagement with the dog teeth 5D of the respective gears 4a, 4b and 5c-5e by moving the piston rods of the corresponding cylinders Pa-Pc. The cylinders Pa-Pc may be pneumatic or hydraulic cylinders. The cylinders Pa and Pb are double-action cylinders so that each of the corresponding dog clutches 6a and 6b can engage either of the gears on both sides. The cylinder Pc may be a single-action cylinder because the corresponding dog clutch 6c is used to engage the gear 4e only.

Besides a torque transmission clutch C connected to the clutch pedal, the transmission 1 of this embodiment has a second torque transmission clutch 7 between the output end of the countershaft 3 and a drive shaft extending to the wheels to selectively connect and disconnect the countershaft 3 to and from the drive shaft. The second clutch 7 may be a wet type multiple disk clutch or a dry type single disk clutch.

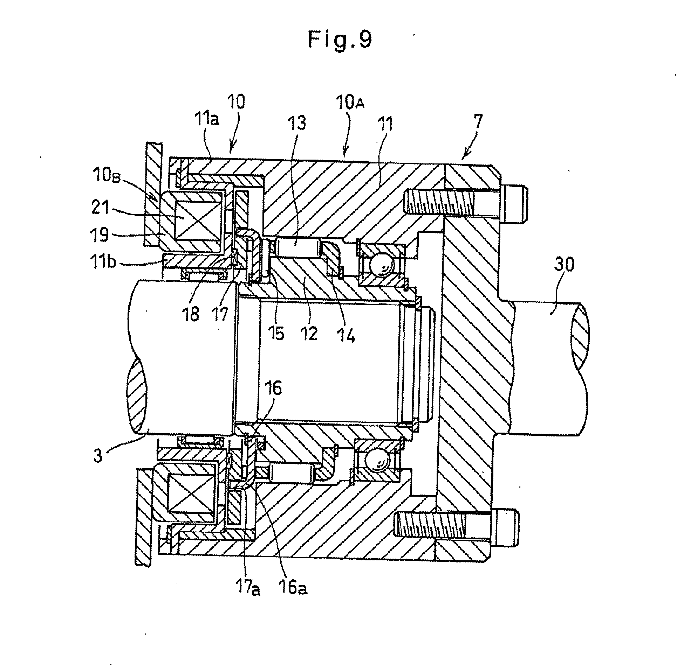

But preferably, as shown in Fig. 9, the second clutch 7 of the embodiment is a clutch unit 10 comprising a roller clutch 10A and an electromagnetic clutch 10B. This clutch unit 10 is substantially identical in structure to the clutch units 10 of the first embodiment except that the outer member 11 is coupled to the drive shaft 30. Thus, elements identical or similar to the elements of the first embodiment are denoted by identical numerals and their description is mostly omitted.

The transmission 1 is controlled by a control system shown in Fig. 7. The control system includes an electronic control unit (ECU) 20 which receives signals that indicate the respective gear speeds from switches S1-S5 which are changed over by operating a shift lever L, and signals indicative of the rpm of the engine E from an engine revolution sensor SE. Based on these signals, the ECU 20 controls the rpm of the engine by adjusting the degree of opening of a throttle valve Tv or the firing timing of the spark plugs, and selectively engages and disengages the rotatable gears 5a, 5b, 4c, 4d and 4e by moving the sleeve members of the respective dog clutches 6a-6c, and also selectively engages or disengages the clutch unit 10.

The ECU 20 is typically a microcomputer having a fixed memory in which are stored a program for controlling the rpm of the engine and a program for controlling the dog clutches 6a-6c and the clutch unit 10. Switch signals from the switches S1-S5 and signals from the engine revolution sensor are stored in a temporary memory. Based on these signals and signals from an accelerator pedal stroke sensor (not shown), the ECU 20 controls the degree of opening of the throttle valve or the firing timing to adjust the engine revolution to an optimum level while the shift lever is being changed over.

With the arrangement of the present invention, the driver does not have to push in the clutch pedal to disengage the clutch C every time he or she shifts gears. To change gears, the driver merely moves the shift lever L from one position to another with the accelerator pedal either kept pushed in or released and without depressing the clutch pedal. For example, in order to upshift from second to third gear speed, the shift lever L is moved from position B to position C (thereby turning off the switch S2 and turning on the switch S3). The moment the switch S2 is turned off, the ECU 20 deenergizes the electromagnetic clutch of the clutch unit 10 to disengage its roller clutch, thereby uncoupling the countershaft 3 from the drive shaft. Simultaneously, the ECU 20 adjusts the degree of opening of the throttle valve Tv, overriding the input from the accelerator pedal, to control the engine rpm to an optimum level. Then, the ECU 20 activates the cylinder Pa through a solenoid valve corresponding to the gear 5b to disengage the dog clutch 6a from the gear 5b. Since the countershaft 3 is uncoupled from the drive shaft and the drive wheels W in this state, the dog clutch 6a can be easily disengaged from the gear 5b.

When the shift lever L is subsequently put into position C and the switch S3 is turned on, the ECU 20 now calculates the rotational speed NREF of the main shaft 2 necessary to synchronize the rotational speeds of the pair of gears 4c and 5c, which correspond to the third gear speed, compares this value NREF with the current rotational speed NE of the main shaft 2, and adjusts the degree of opening of the throttle valve to increase or decrease the engine rpm until the value NE is substantially equal to the value NREF.

Then, the ECU 20 activates the cylinder Pb through a solenoid valve corresponding to the gear 4c to move the sleeve member of the dog clutch 6b into engagement with the gear 4c, and then energizes the electromagnetic coil 21 to engage the roller clutch 10A in the manner as described above with reference to Figs. 3-5, thereby coupling the countershaft 3 to the drive shaft. The engine torque is thus transmitted from the main shaft 2 to the countershaft 3 through the gear pair corresponding to the third gear speed, and then to the drive shaft through the clutch unit 10. In this manner, upshift and downshift between the first and second speeds, between the third and fourth speeds or between the fourth and fifth speeds can be easily carried out simply by moving the shift lever L without depressing the clutch pedal.

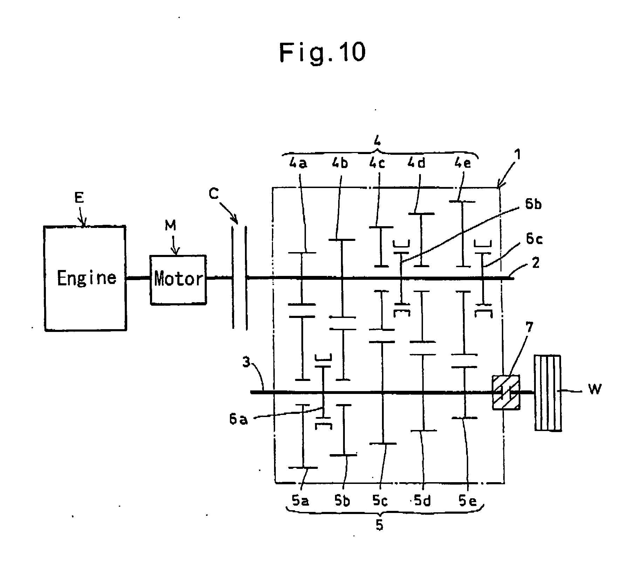

During upshifting, it is usually necessary to reduce the rotational speed of the main shaft 2 for synchronization. During downshifting, it is usually necessary to increase the rotational speed of the main shaft 2 for synchronization. However, if the value NE is significantly lower or significantly higher than the value NREF, it may be difficult to quickly increase or reduce the rotational speed of the main shaft 2 to the target value NREF simply by adjusting the degree of opening of the throttle valve. In such a case, the ECU 20 controls the motor M (see Fig. 10) to assist in quickly increasing or reducing (especially increasing) the rotational speed of the main shaft 2.

Because gear change can be made without the need to depress the clutch pedal to disengage the clutch connected to the clutch pedal, the duration of the clutch improves. One of the pair of gears on the main shaft and the countershaft that is about to be meshed with the corresponding dog clutch is synchronized with the one shaft by adjusting the engine rpm. Thus, no separate synchronizers are necessary, so that the transmission can be made compact. The roller clutch of the clutch unit 10 can be engaged and disengaged in an extremely short period of time compared with the clutch C, which is controlled manually and needs a long time for engagement and disengagement. Thus, by using the clutch unit 10, gear shift can be made in a short time. This improves acceleration, steerability and fuel economy of the vehicle.

## Claims

1. A transmission for use in a vehicle comprising a main shaft, a countershaft, and a plurality of pairs of gears, each pair comprising a first gear fixedly mounted on one of said main shaft and said counter shaft, and a second gear mounted on the other of said main shaft and said countershaft through a clutch unit comprising a roller clutch which can be selectively engaged and disengaged so as to selectively couple and uncouple said second gear to and from the other of said main shaft and said countershaft, and an electromagnetic clutch that is selectively energized and deenergized to engage and disengage said roller clutch, each of said plurality of pairs of gears meshing with each other and providing a different gear ratio from the other pairs of gears.

2. The transmission of claim 1 wherein said electromagnetic clutch includes an electromagnetic coil, said electromagnetic clutch selectively engaging and disengaging said roller clutch under magnetic force produced by said electromagnetic clutch.

3. The transmission of claim 1 wherein said clutch unit is integral with each of said second gears.

4. A control system for controlling the transmission of any of claims 1-3, wherein said transmission has said main shaft thereof connected to an engine of the vehicle and said countershaft thereof connected to wheels of the vehicle, said control system comprising a shift lever shiftable between any two of a plurality of positions each corresponding to one of said plurality of pairs of gears, and a control unit for detecting the position of said shift lever, disengaging one of the clutch units corresponding to the position from which said shift lever has shifted, controlling the engine revolution such that said main shaft rotates in synchronization with said countershaft and the pair of gears corresponding to the position to which said shift lever has shifted, and engaging the clutch unit corresponding to the position to which the shift lever has shifted.

5. The control system of claim 4 wherein when said shift lever has shifted from one to another of said plurality of positions, said control unit controls the engine revolution such that said main shaft rotates in synchronization with said countershaft and the pair of gears corresponding to the position to which said shift lever has shifted, overriding the input from an accelerator pedal of the vehicle.

6. The control system of claim 5 wherein when said shift lever has shifted from one to another of said plurality of positions, said control unit controls the degree of opening of a throttle valve connected to the accelerator pedal, thereby controlling the engine revolution such that said main shaft rotates in synchronization with said countershaft and the pair of gears corresponding to the position to which said shift lever has shifted.

7. The control system of any of claims 4-6 wherein when said shift lever has shifted from one to another of said plurality of positions, said control unit controls an electric motor provided between the engine and the transmission, thereby controlling the engine revolution such that said main shaft rotates in synchronization with said countershaft and the pair of gears corresponding to the position to which said shift lever has shifted.

8. A transmission for use in a vehicle comprising a main shaft, a countershaft, a plurality of pairs of gears, each pair comprising a first gear fixedly mounted on one of said main shaft and said counter shaft, and a second gear rotatably mounted on the other of said main shaft and said countershaft, dog clutches each for engaging at least one of said second gears and nonrotatably mounted on one of said main shaft and said countershaft on which said at least one of said second gears is mounted, an drive shaft through which torque can be transferred between said countershaft and the wheels of the vehicle, and a torque transmission clutch provided between said countershaft and said drive shaft for selectively coupling and uncoupling said countershaft to and from said drive shaft.

9. The transmission of claim 8 wherein said torque transmission clutch is a roller clutch.

10. The transmission of claim 9 further comprising an electromagnetic unit which is selectively energized and deenergized to selectively engage and disengage said roller clutch.

11. A control system for controlling the transmission of any of claims 8-10, wherein said transmission has said main shaft thereof connected to an engine of the vehicle and said countershaft thereof connected to the wheels of the vehicle, said control system comprising a shift lever shiftable between any two of a plurality of positions each corresponding to one of said plurality of pairs of gears, and a control unit for detecting the position of said shift lever, disengaging said torque transmission clutch, disengaging one of said dog clutches from one of said second gears corresponding to the position from which said shift lever has shifted, controlling the engine revolution such that said main shaft rotates in synchronization with said countershaft and the pair of gears corresponding to the position to which said shift lever has shifted, and bringing one of said dog clutches into engagement with one of said second gears to which said shift lever has shifted, and engaging said torque transmission clutch.

12. The control system of claim 11 wherein when said shift lever has shifted from one to another of said plurality of positions, said control unit controls the engine revolution such that said main shaft rotates in synchronization with said countershaft and the pair of gears corresponding to the position to which said shift lever has shifted, overriding the input from an accelerator pedal of the vehicle.

13. The control system of claim 12 wherein when said shift lever has shifted from one to another of said plurality of positions, said control unit controls the degree of opening of a throttle valve connected to the accelerator pedal, thereby controlling the engine revolution such that said main shaft rotates in synchronization with said countershaft and the pair of gears corresponding to the position to which said shift lever has shifted.

14. The control system of any of claims 11-13 wherein when said shift lever has shifted from one to another of said plurality of positions, said control unit controls an electric motor provided between the engine and the transmission, thereby controlling the engine revolution such that said main shaft rotates in synchronization with said countershaft and the pair of gears corresponding to the position to which said shift lever has shifted.
